# EUROPEAN PATENT APPLICATION

(11) **EP 4 228 117 A1**
(43) Date of publication of application: **16.08.2023**
(21) Application number: 21879225.7
(22) Date of filing: 23.09.2021
(51) Int. Cl.: H02J 7/00

(54) **WIRELESS EARPHONE CHARGING CASE, CHARGING CASE, AND WIRELESS CHARGING SYSTEM**

(30) Priority: 16.10.2020 CN 202011111280; 16.10.2020 CN 202022321529 U
(71) Applicant: GUANGDONG OPPO MOBILE TELECOMMUNICATIONS CORP., LTD., Dongguan, Guangdong 523860 (CN)
(72) Inventor: LIN, Jincun, Dongguan, Guangdong 523860 (CN)
(74) Representative: Ipside
(86) International application number: PCT/CN2021/119978
(87) International publication number: WO 2022/078179

(57) **Abstract**

A wireless earphone charging case, a charging case, and a wireless charging system. The wireless earphone charging case comprises: a coil, which is used to establish wireless communication between the wireless earphone charging case and a charging base, and which is used to receive electrical energy from the charging base by means of electromagnetic induction; a metal part, which absorbs the electrical energy from the charging base by means of electromagnetic induction and generates heat; and a control module, which is used to send a control instruction to the charging base, so that the charging base stops or starts radiating electrical energy according to the control instruction.

## Description

The present application claims priority of Chinese Patent Application No. 202011111280.5, filed on October 16, 2020, in the title of "Wireless Earphone Charging Case, Charging Case And Wireless Charging System", and Chinese Patent Application No. 202022321529.7, filed on October 16, 2020, in the title of "Wireless Earphone Charging Case, Charging Case And Wireless Charging System", in the China National Intellectual Property Administration, the entire contents of which are hereby incorporated by reference in their entireties.

### TECHNICAL FIELD

The present disclosure relates to the field of wireless charging, and in particular to a wireless earphone charging case, a charging case, and a wireless charging system.

### BACKGROUND

As electronic technology develops, wireless charging technology is becoming more and more mature, and the number of devices that support wireless charging is increasing.

### SUMMARY OF THE DISCLOSURE

The present disclosure provides a wireless earphone charging case, a charging case, and a wireless charging system, which can improve safety of the charging case in a wireless charging process.

In a first aspect, a wireless earphone charging case is provided and includes the following.

A coil is configured to allow the wireless earphone charging case to communicate wirelessly with a charging base and configured to receive electrical energy from the charging base through electromagnetic induction when the wireless earphone charging case is communicating wirelessly with the charging base.

A metal portion is spaced apart from the coil and configured to, through electromagnetic induction, absorb electrical energy from the charging base and generate heat when the coil receives the electrical energy from the charging base through the electromagnetic induction.

A control module is electrically connected to the coil and configured to send a control command to the charging base via the coil based on a temperature of the metal portion to allow the charging base to stop or to start radiating the electrical energy.

In a second aspect, a charging case is provided and includes the following.

A coil is configured to allow the charging case to communicate wirelessly with a charging base and configured to receive electrical energy from the charging base through electromagnetic induction when the charging case is communicating wirelessly with the charging base.

A metal portion is spaced apart from the coil and configured to, through electromagnetic induction, absorb electrical energy from the charging base and generate heat when the coil receives the electrical energy from the charging base through the electromagnetic induction.

A control module is electrically connected to the coil and configured to send a control command to the charging base via the coil based on a temperature of the metal portion to allow the charging base to stop or to start radiating the electrical energy.

In a third aspect, a wireless charging system is provided and includes the following.

A charging base is configured to radiate electrical energy wirelessly.

A wireless earphone charging case includes the following.

A coil is configured to allow the wireless earphone charging case to communicate wirelessly with a charging base and configured to receive electrical energy from the charging base through electromagnetic induction when the wireless earphone charging case is communicating wirelessly with the charging base.

A metal portion is spaced apart from the coil and configured to, through electromagnetic induction, absorb electrical energy from the charging base and generate heat when the coil receives the electrical energy from the charging base through the electromagnetic induction.

A control module is electrically connected to the coil and configured to send a control command to the charging base via the coil based on a temperature of the metal portion to allow the charging base to stop or to start radiating the electrical energy.

### BRIEF DESCRIPTION OF THE DRAWINGS

In order to illustrate technical solutions in the embodiments of the present disclosure more clearly, the accompanying drawings used in the description of the embodiments will be described in brief in the following. Apparently, the drawings in the following description are only some embodiments of the present application and any ordinary skilled person in the art may obtain other drawings based on these drawings without any creative work.
FIG. 1 is a structural schematic view of a wireless charging system according to an embodiment of the present disclosure.
FIG. 2 is a front view of a wireless earphone charging case according to an embodiment of the present disclosure.
FIG. 3 is a first side view of a wireless earphone charging case according to an embodiment of the present disclosure.
FIG. 4 is a second side view of a wireless earphone charging case according to an embodiment of the present disclosure.
FIG. 5 is a first structural schematic view of a wireless earphone charging case according to an embodiment of the present disclosure.
FIG. 6 is a second structural schematic view of a wireless earphone charging case according to an embodiment of the present disclosure.
FIG. 7 is a third structural schematic view of a wireless earphone charging case according to an embodiment of the present disclosure.
FIG. 8 is a fourth structural schematic view of a wireless earphone charging case according to an embodiment of the present disclosure.
FIG. 9 is a fifth structural schematic view of a wireless earphone charging case according to an embodiment of the present disclosure.

### DETAILED DESCRIPTION

Technical solutions of the embodiments of the present disclosure will be clearly and completely described below by referring to the accompanying drawings in the embodiments of the present disclosure. Apparently, the described embodiments are only a part of but not all of the embodiments of the present disclosure. All other embodiments obtained by any ordinary skilled person in the art based on the embodiments in the present disclosure without creative work shall fall within the scope of the present disclosure.

Embodiments of the present disclosure provide a wireless charging system. The wireless charging system is configured to charge an electronic device wirelessly, such as to charge a charging case. The charging case may be configured to charge other electronic devices. For example, the charging case may be a wireless earphone charging case, and the wireless earphone charging case may be configured to charge wireless earphones.

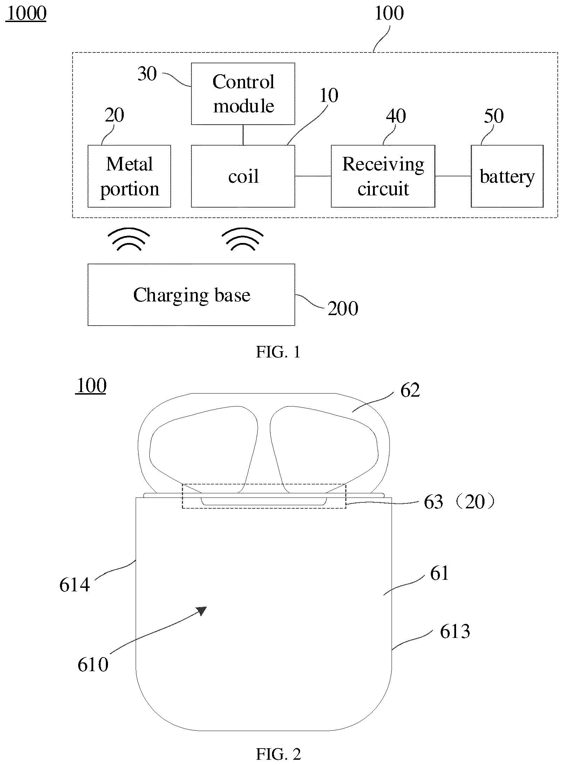

As shown in FIG. 1, FIG. 1 is a structural schematic view of a wireless charging system 1000 according to an embodiment of the present disclosure. The wireless charging system 1000 includes a charging case 100 and a charging base 200. The charging case 100 may be configured to charge other electronic devices. The charging base 200 is connected to an external power source. For example, the charging base 200 may be connected to a power socket. In the following, the present disclosure will be illustrated by taking a wireless earphone charging case as the charging case 100.

The wireless earphone charging case 100 includes a coil 10, a metal portion 20, a control module 30, a receiving circuit 40, and a battery 50.

The coil 10 may be a winding coil. For example, the coil may be a coil formed by winding a copper wire. On one hand, the coil 10 may be configured to send and receive wireless signals, such that the wireless earphone charging case 100 may communicate wirelessly with the charging base 200. On the other hand, the coil 10 may be electrically connected to the charging base 200 by electromagnetic coupling, such that the coil 10 may receive electrical energy from the charging base 200 through electromagnetic induction.

It shall be understood that the charging base 200 may further include a coil. The coil of the charging base 200 may be configured to radiate electrical energy and to allow the charging base 200 to communicate wirelessly with the wireless earphone charging case 100.

While the wireless charging system 1000 is operating, the charging base 200 may firstly send a handshake signal by broadcasting. For example, the charging base 200 send the handshake signal at an interval of one second. A specific receiver that receives the handshake signal may be unavailable, and the handshake signal may be sent outwards by broadcasting. The handshake signal may be configured to establish wireless communication with a to-be-charged electronic device. The charging base 200 has not yet established wireless communication with the wireless earphone charging case 100 while sending the handshake signal. At this time point, the charging base 200 cannot radiate electrical energy.

Subsequently, when the wireless earphone charging case 100 is located within a communication range with the charging base 200, for example, when a user places the wireless earphone charging case 100 on the charging base 200, the wireless earphone charging case 100 receives the handshake signal sent from the charging base 200 and returns a response signal to the charging base 200. Further, the charging base 200 may establish wireless communication with the wireless earphone charging case 100 based on the response signal. It shall be understood that, after the charging base 200 establishes wireless communication with the wireless earphone charging case 100, the wireless communication may be maintained. For example, the wireless earphone charging case 100 may send an energy signal to the charging base 200 through the coil 10 at certain time point, such that the charging base 200, after receiving the energy signal, may control the radiated electrical energy based on the energy signal. When the charging base 200 does not receive the energy signal or when the received energy signal does not meet a preset situation, the charging base 200 may stop radiating the electrical energy or adjust radiation of the electrical energy.

After the charging base 200 establishes wireless communication with the wireless earphone charging case 100, the charging base 200 may start radiating the electrical energy. When the wireless earphone charging case 100 establishes and maintains the wireless communication with the charging base 200, the wireless earphone charging case 100 may receive the electrical energy sent from the charging base 200 through electromagnetic induction. In this way, the charging base 200 may charge the wireless earphone charging case 100.

To be noted that the charging base 200 may determine by default that the wireless earphone charging case 100 is located within the wireless charging range only when the wireless communication is established and maintained between the wireless earphone charging case 100 and the charging base 200, and only in this case, the charging base 200 may radiate the electrical energy. When the wireless earphone charging case 100 is disconnected from the charging base 200, even if the wireless earphone charging case 100 is still placed on the charging base 200, the charging base 200 may still determine by default that the wireless earphone charging case 100 is located outside of the wireless charging range. In this case, in order to ensure safety of wireless charging, the charging base 200 may not radiate the electrical energy.

Therefore, once the wireless earphone charging case 100 is disconnected from the charging base 200, the charging base 200 stops radiating the electrical energy. Alternatively, when the charging base 200 cannot re-establish wireless communication with the wireless earphone charging case 100 within a certain period of time (such as within 5 seconds) after the disconnection, the charging base 200 stops radiating the electrical energy.

The metal portion 20 is a metal element, such as a copper element, an aluminum element, and so on, arranged in the wireless earphone charging case 100. The metal portion 20 is spaced apart from the coil 10. It shall be understood that, while the charging base 200 is radiating the electrical energy, the metal portion 20 may be electrically connected to the charging base 200 through electromagnetic coupling. Therefore, while the coil 10 receives the electrical energy sent from the charging base 200 through electromagnetic induction, the metal portion 20 may also receive the electrical energy sent from the charging base 200 through electromagnetic induction and generate heat. In this way, a temperature of the metal portion 20 may increase. It shall be understood that, when the temperature of the metal portion 20 increases, a temperature of the wireless earphone charging case 100 may increase, affecting safety of the wireless earphone charging case 100 in the charging process.

The control module 30 is a control center of the wireless earphone charging case 100. The control module 30 may be, for example be, a micro control unit (MCU). The control module 30 is electrically connected to the coil 10. The control module 30 may be used to control the charging process of the wireless earphone charging case 100. For example, the control module 30 may be configured to send, based on the temperature of the metal portion 20, a control command via the coil 10 to the charging base 200, allowing the charging base 200 to stop or to start radiating the electrical energy based on the control command.

For example, in some embodiments, while the wireless earphone charging case 100 is performing charging, the control module 30 may allow the charging base 200 to stop radiating the electrical energy based on the control command when the temperature of the metal portion 20 is excessively high, such that the metal portion 20 may not continually generate the heat and may be gradually cooled down. When the temperature of the metal portion 20 is reduced to a lower range, the control module 30 may control the charging base 200 to start radiating the electrical energy based on the control command in order to continually charge the wireless earphone charging case 100. In this case, the control module 30 may control the charging base 200 to stop radiating the electrical energy based on the control command, and may also control the charging base 200 to start radiating the electrical energy based on the control command.

For example, in some embodiments, while the wireless earphone charging case 100 is performing charging, the control module 30 may control the charging base 200 to stop radiating the electrical energy based on the control command when the temperature of the metal portion 20 is excessively high, such that the metal portion 20 may not continually generate heat and may be gradually cooled down. When the temperature of the metal portion 20 is reduced to a lower range, and when wireless communication is established between the wireless earphone charging case 100 and the charging base 200, the charging base 200 may automatically start radiating the electrical energy to continually charging the wireless earphone charging case 100. In this case, the control module 30 may only control the charging base 200 to stop radiating the electrical energy based on the control command, but may not control the charging base 200 to start radiating the electrical energy based on the control command. Instead, the charging base 200 may automatically start radiating the electrical energy when the wireless communication is established.

For example, in some embodiments, while the wireless earphone charging case 100 is performing charging, the control module 30 may control the wireless earphone charging case 100 to disconnect the wireless communication from the charging base 200 when the temperature of the metal portion 20 is excessively high. At this time point, the charging base 200 automatically stops radiating the electrical energy. When the temperature of the metal portion 20 is reduced to the lower range, and when the wireless earphone charging case 100 establishes wireless communication with the charging base 200, the control module 30 may control the charging base 200 to start radiating the electrical energy based on the control command in order to continually charging the wireless earphone charging case 100. In this case, the control module 30 may only control the charging base 200 to start radiating the electrical energy based on the control command, but not control the charging base 200 to stop radiating the electrical energy based on the control command. Instead, the charging base 200 automatically stops radiating the electrical energy when the wireless communication is disconnected.

Therefore, the temperature of the metal portion 20 may be controlled, by the control module 30, within a range, and that is, the temperature of the wireless earphone charging case 100 may be kept within a range, such that the safety of the wireless earphone charging case 100 in the wireless charging process may be improved. The receiving circuit 40 is electrically connected to the coil 10. The receiving circuit 40 is configured to process the electrical energy received by the coil 10, for example to perform filtering, rectifying, and so on, on the electrical energy, such that a charging current may be formed.

The battery 50 is electrically connected to the receiving circuit 40, and a current output from the receiving circuit 40 may be configured to charge the battery 50. In this way, the electrical energy received by the coil 10 may be stored in the battery 50.

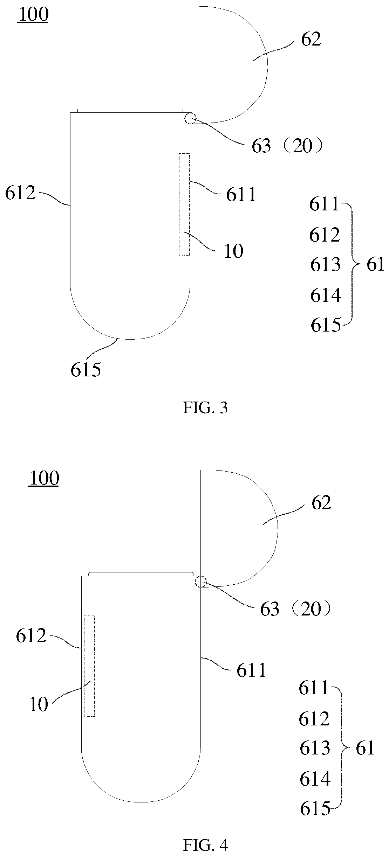

As shown in FIG. 2, FIG. 3, and FIG. 4, FIG. 2 is a front view of the wireless earphone charging case 100 according to an embodiment of the present disclosure, FIG. 3 is a first side view of the wireless earphone charging case 100 according to an embodiment of the present disclosure, and FIG. 4 is a second side view of the wireless earphone charging case 100 according to an embodiment of the present disclosure.

The wireless earphone charging case 100 includes a charging case body 61, a charging case lid 62, and a metal shaft 63. The charging case lid 62 is connected to the charging case body 61. For example, the charging case lid 62 is connected to the charging case body 61 through the metal shaft 63. The charging case body 61, the metal shaft 63, and the charging case lid 62 may form a hinge structure. Therefore, the charging case lid 62 may rotate around the metal shaft 63 with respect to the charging case body 61, such that the wireless earphone charging case 100 may be switched between an open state and a closed state. As shown in FIG. 2, the wireless earphone charging case 100 is in the open state. When the wireless earphone charging case 100 is in the closed state, the charging case lid 62 and the charging case body 61 are attached to each other. Material of the metal shaft 63 may include aluminum alloy and so on.

The coil 10 may be arranged at the charging case body 61. It shall be understood that the coil 10 being arranged at the charging case body 61 includes at least one of the following cases. The coil 10 may be arranged on a side of a shell inner surface near the charging case body 61. The coil 10 may be arranged on a side of a shell outer surface near the charging case body 61. The coil 10 may be arranged on a shell of the charging case body 61. For example, the coil 10 may be attached to the shell inner surface or the shell outer surface, or may be embedded in the shell. In the field of wireless charging, a distance between a coil at a transmitting end and a coil at a receiving end is related to an efficiency of wireless charging. Therefore, when configuring the coil, a distance between the coil and the shell may be determined based on requirements about the charging efficiency of the product. In this way, when the wireless earphone charging case 100 is placed on the charging base 200, the coil 10 may receive the electrical energy from the charging base 200 through electromagnetic induction, such that the wireless earphone charging case 100 may be charged. The control module 30 may be arranged inside the charging case body 61, such that the process of charging the wireless earphone charging case 100 may be controlled by the control module 30.

It shall be understood that, since the charging case lid 62 is connected to the charging case body 61 by the metal shaft 63, the metal shaft 63 may also absorb the electrical energy from the charging base 200 and generate heat through electromagnetic induction while the coil 10 is receiving the electrical energy from the charging base 200. Therefore, in some embodiments, the metal portion 20 may include the metal shaft 63.

In some embodiments, the charging case body 61 defines a receiving space 610. The receiving space 610 may be a cavity located inside the charging case body 61. The receiving space 610 may be defined to receive the wireless earphone. For example, the wireless earphone may be placed in the receiving space 610, such that the wireless earphone charging case 100 may charge the wireless earphone. Further, it shall be understood that the control module 30 may also be received in the receiving space 610.

In some embodiments, the charging case body 61 includes a side wall 611, a side wall 612, a side wall 613, a side wall 614, and a bottom wall 615. The side wall 612 is opposite to the side wall 611, and the side wall 614 is opposite to the side wall 613. The side wall 611, the side wall 613, the side wall 612, and the side wall 614 are connected one to one in sequence. The bottom wall 615 is connected to each of the side wall 611, the side wall 613, the side wall 612, and the side wall 614. Therefore, the side wall 611, the side wall 613, the side wall 612, the side wall 614, and the bottom wall 615 may cooperatively define the receiving space 610. It shall understood that an opening of the charging case body 61, i.e., an opening in the receiving space 610, may be defined opposite to the bottom wall 615.

In some embodiments, the metal shaft 63 and the coil 10 may be disposed on a same side wall of the charging case body 61. For example, the metal shaft 63 is connected to a first side wall of the charging case body 61, and the coil 10 is also disposed on the first side wall of the charging case body 61, as shown in FIG. 3. In this case, since the metal shaft 63 is disposed near the coil 10, a temperature of the metal shaft 63 may increase dramatically in the wireless charging process. However, in this configuration, the lid of the wireless earphone charging case 100 may be easily open, and the earphone may be taken out of the wireless earphone charging case 100 easily, while the wireless earphone charging case 100 is being charged. Further, by applying the above configuration, the user's usage habits may be met, such that a better user experience may be achieved.

In some embodiments, the metal shaft 63 and the coil 10 are disposed on different side walls of the charging case body 61. For example, the metal shaft 63 is connected to the first side wall of the charging case body 61, and the coil 10 is disposed on a second side wall of the charging case body 61, as shown in FIG. 4. In this case, the metal shaft 63 is disposed relatively far away from the coil 10, and therefore, the temperature of the metal shaft 63 may increase slightly in the wireless charging process. However, by applying this configuration, while the wireless earphone charging case 100 is being charged, the lid of the wireless earphone charging case 100 may not be easily open, and the earphone may not be taken out of the wireless earphone charging case 100 easily. Further, while charging the wireless earphone charging case 100, a manner of placing the wireless earphone charging case 100 on the charging base 200 may be different from the user's usage habits.

In some embodiments, the coil 10 may be disposed on a plurality of side walls of the charging case body 61. For example, the metal shaft 63 is connected to the first side wall of the charging case body 61, and the coil 10 is disposed on the first side wall and the second side wall of the charging case body 61. In this way, when either of the first side wall and the second side wall is located on the charging base 200, the wireless earphone charging case 100 may be charged quickly. Therefore, the user's demand of placing the wireless earphone charging case at various angles may be met. It shall be understood that, in this case, when the wireless earphone charging case 100 starts performing wireless charging, the wireless earphone charging case 100 may select coils on which one or more side walls to receive the electrical energy based on a wireless charging efficiency of each of the coils, such that the wireless charging efficiency may be improved.

The first side wall may be any one of the side wall 611, the side wall 612, the side wall 613, and the side wall 614, and the second side wall may be any side wall different from the first side wall. For example, the first side wall may be side wall 611, and the second side wall may be side wall 612 opposite to the side wall 611, or the second side wall may be the side wall 613 or the side wall 614 adjacent to the side wall 611.

Disposing the coil 10 on the first side wall or on the second side wall, or on both the first side wall and the second side wall, may be achieved in a variety of ways.

For example, in some embodiments, the coil 10 may be embedded in the first side wall or the second side wall. For example, a recess may be defined in the first side wall or the second side wall. The coil 10 may be received in the recess, and subsequently, a non-metallic material, such as plastic, may be arranged to cover a surface of the coil 10. It shall be understood that when the coil 10 is embedded in the first side wall or the second side wall, the coil 10 may be prevented from moving or falling off while the wireless earphone charging case 100 is in use, such that the coil 10 may be mounted more stably.

Further, for example, in some embodiments, the coil 10 may be attached to a surface of the first side wall or a surface of the second side wall or may be disposed on a surface near the first side wall or the second side wall. For example, the coil 10 may be adhered to an inner surface of the first side wall or an inner surface of the second side wall by glue. It shall be understood that a process of arranging the coil 10 may be simplified when the coil 10 is attached to the surface of the first side wall or the surface of the second side wall.

It shall be understood that, while the wireless earphone charging case 100 is being charged, the coil 10 is disposed near the charging base 200. When the metal shaft 63 and the coil 10 are disposed on the same side wall of the charging case body 61, a distance between the metal shaft 63 and the coil 10 may be small, i.e., a distance between the metal shaft 63 and the charging base 200 may be small. Therefore, when the coil 10 receives the electrical energy from the charging base 200, the metal shaft 63 absorbs the electrical energy from the charging base 200 and generates heat more severely, causing the temperature of the metal shaft 63 to increase rapidly.

Therefore, in some embodiments, in order to reduce the heat generated by the metal shaft 63 while the case is being charging, the metal shaft 63 and the coil 10 may be disposed on different side walls of the charging case body 61 to increase the distance between the metal shaft 63 and the coil 10, i.e., to increase the distance between the metal shaft 63 and the charging base 200, such that the heat generated by the metal shaft 63 may be reduced.

In the description of the present disclosure, it shall be understood that terms such as "first" and "second" are used only to distinguish similar objects and shall not be interpreted as indicating or implying relative importance or implicitly specifying the number of the indicated technical features.

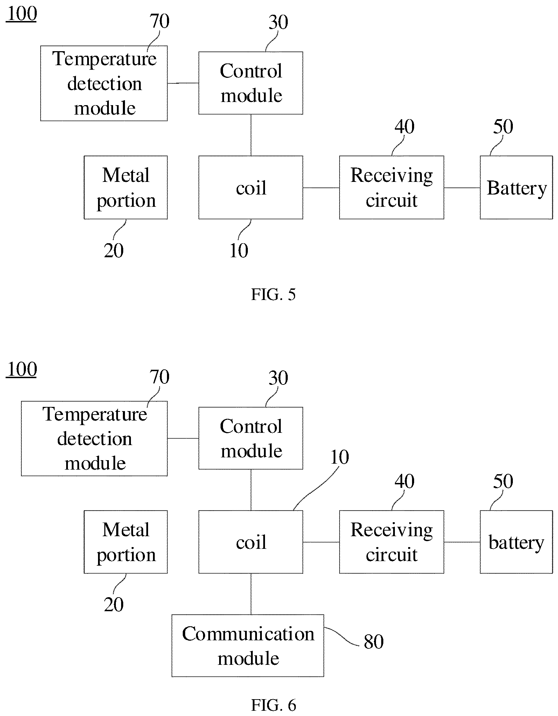

In some embodiments, as shown in FIG. 5, FIG. 5 is a first structural schematic view of a wireless earphone charging case 100 according to an embodiment of the present disclosure.

The wireless headset charging case 100 further includes a temperature detection module 70. The temperature detection module is configured to detect the temperature of the metal portion 20. The temperature detection module 70 is electrically connected to the control module 30, such that the temperature detection module 70 may transmit detected temperature data to the control module 30, and the control module 30 may obtain the temperature of the metal portion 20.

The temperature detection module 70 may include a temperature sensor. The temperature sensor may be a thermistor. The temperature detection module 70 may be arranged on the metal portion 20, such as attached to a surface of the metal portion 20. The temperature detection module 70 may alternatively be arranged at other locations of the wireless earphone charging case 100, such as on the side wall of the charging case body 61. It can be understood that when the temperature detection module 70 is arranged at other locations, it is only necessary to establish correspondence between the temperature of the metal portion 20 and a temperature of the location where the temperature detection module 70 is located. In this way, the temperature of the metal portion 20 may be detected by the temperature detection module 70.

In some embodiments, when the temperature detected by the temperature detection module 70 is greater than or equal to a first predetermined temperature, the control module 30 sends a first control command to the charging base 200 via the coil 10 to cause the charging base 200 to stop radiating electrical energy based on the first control command. A value of the first predetermined temperature may be predetermined. The first predetermined temperature may be set based on usage experience or may be determined based on measurement. For example, the first predetermined temperature may be 40 degrees. The first control command may be a stop-charging command.

For example, when the temperature detected by the temperature detection module 70 is greater than or equal to 40 degrees, the control module 30 may send the stop-charging command to the charging base 200 via the coil 10. After the charging base 200 receives the stop-charging command, the charging base 200 may stop radiating electrical energy. In this way, the control module 30 may control to temporarily pause the wireless charging process, preventing the temperature of the metal portion 20 from being further increased, ensuring safety of the wireless earphone charging case 100.

Subsequently, when the temperature detected by the temperature detection module 70 is less than a second predetermined temperature, the control module 30 sends a second control command to the charging base 200 via the coil 10 to allow the charging base 200 to start radiating electrical energy based on the second control command. The second control command may be a resume-charging command. The second predetermined temperature is less than or equal to the first predetermined temperature. For example, when the first predetermined temperature is 40 degrees, the second predetermined temperature may be 40 degrees or less than 40 degrees, such as 25 degrees, and so on.

For example, when the temperature detected by the temperature detection module 70 is less than 25 degrees, the control module 30 sends the resume-charging command to the charging base 200 via the coil 10. When the charging base 200 receives the resume-charging command, the charging base 200 may start radiating electrical energy, and the wireless charging process may be resumed.

Therefore, while the wireless earphone charging case 100 is being charged, the temperature of the metal portion 20 is not excessively, and at the same time, the wireless earphone charging case 100 can be charged as quickly as possible. In the embodiments of the present disclosure, the wireless earphone charging case 100 may control the wireless charging process based on the temperature of the metal portion 20, such as based on the temperature of the metal shaft 63. In this way, the temperature of the wireless earphone charging case 100 may not be excessively high, and safety of the wireless earphone charging case 100 may not be affected. In particular, when the user places the side wall to which the metal shaft 63 is attached near the charging base 200, the safety risk caused by the high temperature of the metal shaft 63 may be avoided by applying the embodiments of the present disclosure. In addition, the user may place the wireless earphone charging case 100 at various angles, such that the user may use the charging case easily.

It shall be understood that, when the second predetermined temperature is set to be equal to the first predetermined temperature, for example, both the second predetermined temperature and the first predetermined temperature are 40 degrees, and when the temperature of the metal portion 20 is greater than and equal to the first predetermined temperature, the wireless charging may be controlled to be interrupted. When the temperature of the metal portion 20 is less than the first predetermined temperature, the wireless charging may be controlled to be resumed. In practice, the control module 30 may need to send control commands frequently, and the charging base 200 may also need to perform operations frequently, such that the wireless charging process of the wireless earphone charging case 100 may be interrupted and resumed frequently. Therefore, the wireless charging process of the wireless earphone charging case 100 may be unstable. Therefore, in order to improve stability of the wireless charging process of the wireless earphone charging case 100, the second predetermined temperature may be set to be less than the first predetermined temperature, and that is, two different temperatures may be set to control the wireless charging to be interrupted and resumed. For example, the first predetermined temperature may be set to be 40 degrees, and the second predetermined temperature may be set to be 30 degrees, 25 degrees, and so on.

Therefore, while the wireless earphone charging case 100 is being charged, the temperature of the metal portion 20 is not excessively high, the wireless earphone charging case 100 can be charged as quickly as possible, and the process of charging the wireless earphone charging case 100 may not be interrupted and resumed frequently. In this way, the wireless earphone charging case 100 may be charged stably.

In practice, following situations may occur. The temperature detected by the temperature detection module 70 is excessively high, for example, the detected temperature is greater than the first predetermined temperature. The control module 30 sends the stop-charging command to the charging base 200 via the coil 10. However, the charging base 200 may fail to receive the stop-charging command properly due to various factors, for example, the charging base 200 may be interfered by wireless signals sent from other electronic devices. Alternatively, the charging base 200 receives the stop-charging command but cannot stop radiating electrical energy successfully due to various factors. Therefore, when these situations occur, even when the control module 30 sends the stop-charging command to the charging base 200 via the coil 10, the charging base 200 may continue radiating electrical energy, such that the temperature of the metal portion 20 may further increase, and the wireless charging process of the wireless earphone charging case 100 may be dangerous.

Therefore, in order to ensure the wireless earphone charging case 100 to be charged safely, the control module 30 may further send a first control command to the charging base 200 via the coil 10 to disconnect wireless communication with the charging base 200 via the coil 10 after the charging base 200 stops radiating electrical energy based on the first control command, such as after the control module 30 sends the stop-charging command to the charging base 200. For example, the control module 30 may control the disconnection of the wireless communication with the charging base 200 via the coil 10 within a preset period of time, such as 5 seconds, after sending the first control command to the charging base 200. It shall be understood that the preset time period may be determined based on practical needs and may be related to time at which the charging base 200 sends the handshake signal. For example, the communication may be disconnected before the handshake signal sent by the charging base 200 is received, such that a situation of the charging base 200 starting radiating power again due to responding to the handshake signal may be avoided.

It shall be understood that after the control module 30 sends the first control command to the charging base 200 via the coil 10, even when the charging base 200 fails to receive the first control command, or when the charging base 200 receives the first control command but fails to successfully stop radiating electrical energy, the charging base 200 cannot detect wireless communication with the wireless earphone charging case 100 since the wireless communication with the charging base 200 is disconnected via the coil 10. In this case, the charging base 200 determines, by default, that the wireless earphone charging case 100 is located outside the wireless charging range. Therefore, the charging base 200 may stop radiating electricity automatically to interrupt the wireless charging process, ensuring the safety of wireless charging.

It shall be understood that, after the wireless communication with the charging base 200 is disconnected via the coil 10, the charging base 200 may continuously send the handshake signal outwards. It is understood that, at this time point, the control module 30 may control the coil 10 to not respond to the handshake signal sent by the charging base 200 to allow the wireless communication between the wireless earphone charging case 100 and the charging base 200 to be disconnected.

Subsequently, when the temperature detected by the temperature detection module 70 is less than the second predetermined temperature, the control module 30 controls the coil 10 to respond to the handshake signal sent by the charging base 200. For example, the control module 30 controls the coil 10 to send an answering signal to the charging base 200 to re-establish the wireless communication between the wireless earphone charging case 100 and the charging base 200.

It shall be understood that, in some embodiments, the control module 30 controls the coil 10 to respond to the handshake signal sent by the charging base 200 to establish wireless communication between the wireless earphone charging case 100 and the charging base 200, and subsequently sends the second control command to the charging base 200 via the coil 10 to allow the charging base 200 to start radiating electrical energy based on the second control command. In this way, the wireless charging process may be resumed to charge the wireless earphone charging case 100.

The process of the charging base 200 sending the handshake signal and the wireless earphone charging case 100 responding to the handshake signal to establish wireless communication between the wireless earphone charging case 100 and the charging base 200 may be referred to the wireless charging protocol.

In some embodiments, as shown in FIG. 6, FIG. 6 is a second structural schematic view of a wireless earphone charging case according to an embodiment of the present disclosure.

The wireless earphone charging case 100 further includes a communication module 80. The communication module 80 is configured to provide a communication signal. The coil 10 is electrically connected to the communication module 80. The coil 10 is configured to interrupt transmission of the communication signal to disconnect the wireless communication with the charging base 200, or to transmit the communication signal to establish wireless communication with the charging base 200.

For example, the control module 30 may send the first control command to the charging base 200 to cause the charging base 200 to stop radiating electrical energy based on the first control command, and subsequently controls the coil 10 to interrupt transmission of the communication signal to disconnect the wireless communication with the charging base 200 via the coil 10. In this way, controlling the charging base 200 to stop radiating electrical energy may be achieved indirectly.

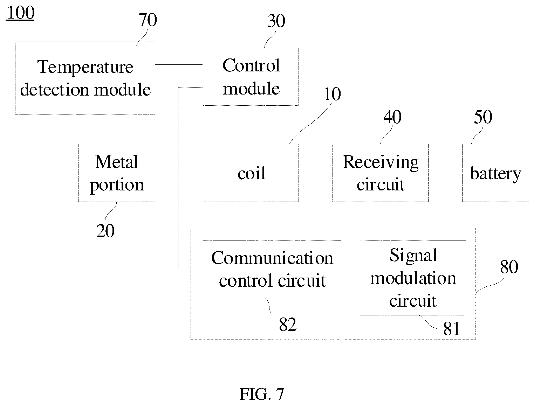

In some embodiments, as shown in FIG. 7, FIG. 7 is a third structural schematic view of a wireless earphone charging case according to an embodiment of the present disclosure.

The communication module 80 includes a signal modulation circuit 81 and a communication control circuit 82. The signal modulation circuit 81 is configured to provide the communication signal. The communication control circuit 82 is electrically connected to the signal modulation circuit 81, the coil 10, and the control module 30. Therefore, the communication signal provided by the signal modulation circuit 81 may be transmitted to the coil 10 through the communication control circuit 82 and transmitted to the charging base 200 through the coil 10 to allow wireless communication with the charging base 200 to be established.

The control module 30 may be configured to control the communication control circuit 82 to control the communication control circuit 82 to be conducted to or disconnected from the coil 10, allowing the coil 10 to transmit the communication signal or to interrupt transmission of the communication signal. In this way, wireless communication with the charging base 200 may be established or disconnected via the coil 10.

For example, when wireless communication with the charging base 200 needs to be established, the control module 30 may control the communication control circuit 82 to conduct with the coil 10 to allow the coil 10 to transmit the communication signal to the charging base 200. For example, the coil 10 may be allowed to respond to the handshake signal broadcasted by the charging base 200, such that wireless communication with the charging base 200 may be established.

When the wireless communication with the charging base 200 needs to be disconnected, the control module 30 may control the communication control circuit 82 to be disconnected from the coil 10, allowing the coil 10 to interrupt transmission of the communication signal, such that the communication signal cannot be transmitted to the charging base 200, and the wireless communication with the charging base 200 may be disconnected.

In the present embodiment, the control module 30 may send the control command to the charging base 200 to cause the charging base 200 to stop radiating electrical energy based on the control command, such as sending the stop-charging command to the charging base 200, and may subsequently control the communication control circuit 82 to disconnect from the coil 10, such that the coil 10 interrupts the transmission of the communication signal, thereby disconnecting the wireless communication with the charging base 200.

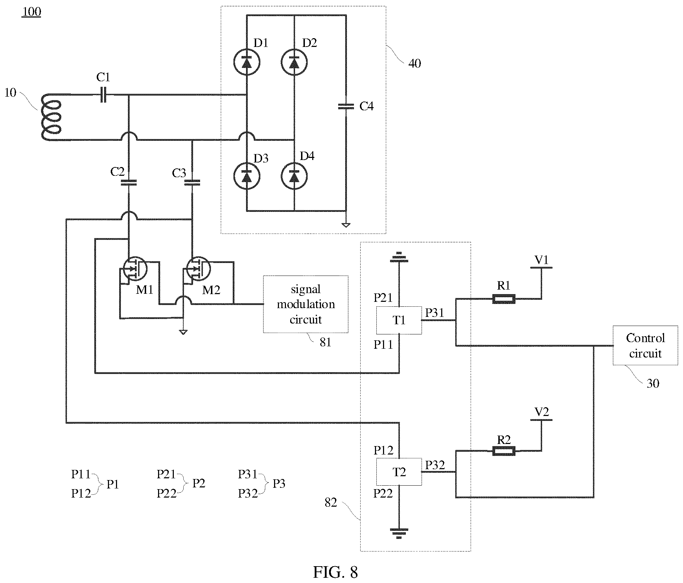

In some embodiments, as shown in FIG. 8, FIG. 8 is a fourth structural schematic view of the wireless earphone charging case 100 according to an embodiment of the present disclosure.

The coil 10 may be connected to a receiving circuit 40 via a capacitor C 1 and connected to the communication control circuit 82 via a capacitor C2 and a connected C3. The communication control circuit 82 is connected to the signal modulation circuit 81 via a metal oxide semiconductor (MOS) tube M1 and a MOS tube M2.

The capacitor C1 may serve as a filter to filter out an interfering signal in the electrical energy received by the coil 10. Each of the capacitor C2 and the capacitor C3 may also serve as the filter to avoid the electrical energy received by the coil 10 from being transmitted to the communication control circuit 82 and the signal modulation circuit 81.

The receiving circuit 40 includes a diode D1, a diode D2, a diode D3, a diode D4, and a capacitor C4. The diode D1, the capacitor C4, and the diode D3 are connected in series and are connected to an end of the coil 10. The diode D2, the capacitor C4, and the diode D4 are connected in series and are connected to the other end of the coil 10. A battery 50 may be connected in parallel to the capacitor C4 and are connected to two ends of the capacitor C4, such that the battery 50 may be charged.

Understandably, capacitance values of the capacitor C 1, the capacitor C2, the capacitor C3, and the capacitor C4 may be determined based on actual needs. Specifications of the MOS tube M1 and the MOS tube M2 may be determined based on actual needs. Specifications of the diode D1, the diode D2, the diode D3, and the diode D4 may be determined based on actual needs.

The communication control circuit 82 includes a first port P1, a second port P2, and a third port P3. The first port P1 is electrically connected to the signal modulation circuit 81 and the coil 10. For example, the first port P1 may be electrically connected to the signal modulation circuit 81 via the MOS tube M1 and the MOS tube M2, and electrically connected to the coil 10 via the capacitor C2 and the capacitor C3. The second port P2 is grounded. The third port P3 is electrically connected to the control module 30.

Understandably, the communication control circuit 82 may be electrically connected to two ends of the coil 10. Therefore, each of the first port P1, the second port P2, and the third port P3 includes two sub-ports. For example, the first port P1 may include a sub-port P11 and a sub-port P12. The second port P2 may include a sub-port P21 and a sub-port P22. The third port P3 may include a sub-port P31 and a sub-port P32.

The sub-port P11 is electrically connected to the signal modulation circuit 81 via the MOS tube M1 and electrically connected to an end of the coil 10 via the capacitor C2. The sub-port P12 is electrically connected to the signal modulation circuit 81 via the MOS tube M2 and electrically connected to the other end of the coil 10 via the capacitor C3. The sub-port P21 and the sub-port P22 are both grounded. The sub-port P31 and the sub-port P32 are both electrically connected to the control module 30. The sub-port P31 may be connected to a power supply V1 via the resistor R1. The sub-port P32 may be connected to a power supply V2 via the resistor R2. Resistance values of the resistor R1 and the resistor R2 may be determined based on actual needs. The power supply V1 and the power supply V2 may be, for example, 5V.

The control module 30 may send a control signal to the communication control circuit 82. For example, the control module 30 may send the control signal to the communication control circuit 82 via the third port P3 to control the first port P1 and the second port P2 to be conducted or disconnected. For example, the sub-port P11 and the sub-port P21 may be controlled to be conducted or disconnected, and the sub-port P12 and the sub-port P22 may be controlled to be conducted or disconnected.

Understandably, the second port P2 is grounded. For example, the sub-port P21 and the sub-port P22 included in the second port P2 are grounded. Therefore, when the first port P1 and the second port P2 are conducted, a signal from the first port P1 may be transmitted to the ground. In this case, the coil 10 is equivalent to be short-circuited relative to the communication signal, and that is, the coil 10 is not conducted with the communication control circuit 82, and that is, the coil 10 is disconnected from the communication control circuit 82. Therefore, the communication signal provided by the signal modulation circuit 81 may be transmitted to the ground through the first port P1 and may not be transmitted to other components through the coil 10. When the first port P1 is disconnected from the second port P2, the signal from the first port P1 may not be transmitted to the ground. In this case, the coil 10 is conducted with the communication control circuit 82, such that the communication signal provided by the signal modulation circuit 81 may be transmitted to the coil 10 and further transmitted to the charging base 200 through the coil 10.

Therefore, in the present disclosure, when the wireless communication with the charging base 200 needs to be disconnected, for example, after the control module 30 sends the control command to the charging base 200 to allow the charging base 200 to stop radiating electrical energy based on the control command, the control signal may be transmitted to the communication control circuit 82, allowing the first port P1 to be conducted with the second port P2, i.e., allowing the sub-port P11 to be conducted with the sub-port P21. In this way, the communication signal provided by the signal modulation circuit 81 is transmitted to the ground through the second port P2. In this case, the communication signal provided by the signal modulation circuit 81 is not transmitted to other components through the coil 10, such that the wireless communication with the charging base 200 may be disconnected.

When the wireless communication with the charging base 200 needs to be established or maintained, the control module 30 may send the control signal to the communication control circuit 82 to disconnect the first port P1 from the second port P2, and that is, to disconnect the sub-port P11 from the sub-port P21 and to disconnect the sub-port P12 from the sub-port P22. In this case, the communication signal provided by the signal modulation circuit 81 may be transmitted to other components through the coil 10, such that the wireless communication with the charging base 200 may be established or maintained.

In some embodiments, as shown in FIG. 8, the communication control circuit 82 includes a transistor, such as a transistor T1 and a transistor T2. The transistor is electrically connected to the first port P1, the second port P2, and the third port P3. For example, the transistor T1 is electrically connected to the sub-port P11, the sub-port P21, and the sub-port P31, and the transistor T2 is electrically connected to the sub-port P12, the sub-port P22, and the sub-port P32.

The control module 30 is configured to control the transistor to conduct the first port P1 with the second port P2, or to disconnect the first port P1 from the second port P2. For example, the control module 30 may be configured to control the sub-port P11 to be conducted with the sub-port P21, and to control the sub-port P12 to be conducted with the sub-port P22, to disconnect the wireless communication with the charging base 200. Alternatively, the control module 30 may be configured to control the sub-port P11 to be disconnected from the sub-port P21 and to control the sub-port P12 to be disconnected from the sub-port P22 to enable the wireless communication with the charging base 200 to be established or maintained.

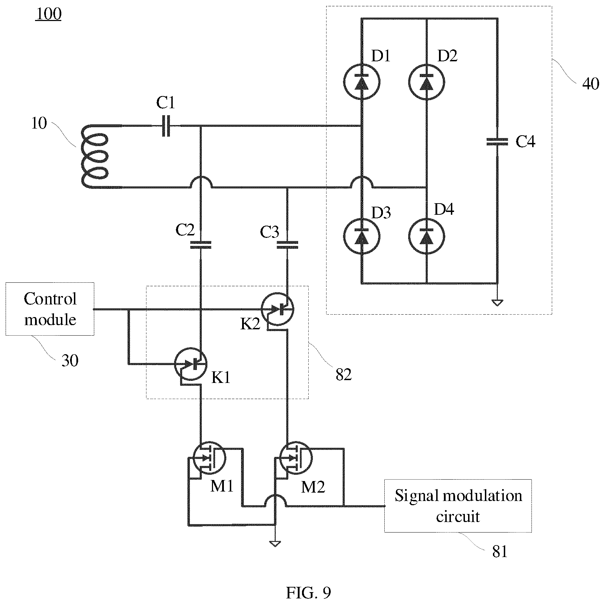

In some embodiments, as shown in FIG. 9, FIG. 9 is a fifth structural schematic view of the wireless earphone charging case 100 according to an embodiment of the present disclosure.

The communication control circuit 82 includes an analogue switch, such as an analogue switch K1 and an analogue switch K2. The analogue switch K1 and the analogue switch K2 are configured to allow the signal modulation circuit 81 to be conducted with or disconnected from the coil 10. Each of the analogue switch K1 and the analogue switch K2 may be, for example, a MOS tube, a thin film transistor (TFTs), and so on. The analogue switch K1 is electrically connected to the signal modulation circuit 81 via the MOS tube M1. The analogue switch K1 is electrically connected to an end of the coil 10 via the capacitor C2 and is electrically connected to the control module 30. The analogue switch K2 is electrically connected to the signal modulation circuit 81 via the MOS tube M2. The analogue switch K2 is electrically connected to the other end of the coil 10 via the capacitor C3 and is electrically connected to the control module 30.

The control module 30 is configured to control the analogue switches to be conducted or disconnected. For example, the control module 30 is configured to control the analogue switches K1 and K2 to be conducted simultaneously to allow the signal modulation circuit 81 to be conducted with or disconnected from the coil 10.

For example, when the wireless communication with the charging base 200 needs to be disconnected, the control module 30 may send a control signal to the analogue switch K1 and the analogue switch K2, allowing the analogue switch K1 and the analogue switch K2 to be disconnected at the same time. At this moment, electrical connection between the signal modulation circuit 81 and the coil 10 is disconnected. Therefore, the communication signal provided by the signal modulation circuit 81 may not be transmitted to other components through the coil 10, and therefore, the wireless communication with the charging base 200 may be disconnected.

When the wireless communication with the charging base 200 needs to be established or maintained, the control module 30 may send the control signal to the analogue switch K1 and the analogue switch K2 to allow the analogue switch K1 and the analogue switch K2 to be conducted simultaneously. At this moment, the signal modulation circuit 81 remains electrically connected to the coil 10. The communication signal provided by the signal modulation circuit 81 may be transmitted to other components through the coil 10, such that the wireless communication with the charging base 200 may be established or maintained.

The above provides a detailed description of the charging case and the wireless charging system in the embodiments of the present disclosure. In the present disclosure, specific examples have been applied to illustrate the principles and implementation of the present disclosure, and the above description of embodiments is only used to facilitate understanding the present disclosure. Any ordinary skilled person in the art may make changes in the specific implementation and scope of the present disclosure based on concepts of the present disclosure. In summary, the content of the present disclosure shall not be interpreted as a limitation of the present disclosure.

## Claims

1. A wireless earphone charging case, comprising:
a coil, configured to allow the wireless earphone charging case to communicate wirelessly with a charging base and configured to receive electrical energy from the charging base through electromagnetic induction when the wireless earphone charging case is communicating wirelessly with the charging base;
a metal portion, spaced apart from the coil and configured to, through electromagnetic induction, absorb electrical energy from the charging base and generate heat when the coil receives the electrical energy from the charging base through the electromagnetic induction; and
a control module, electrically connected to the coil and configured to send a control command to the charging base via the coil based on a temperature of the metal portion to allow the charging base to stop or to start radiating the electrical energy.

2. The wireless earphone charging case according to claim 1, further comprising:
a charging case body, wherein the coil is disposed at the charging case body, and the control module is disposed inside the charging case body; and
a charging case lid, connected to the charging case body by a metal shaft, wherein the metal portion comprises the metal shaft.

3. The wireless earphone charging case according to claim 2, wherein the charging case body comprises:
a first side wall, wherein the metal shaft is connected to the first side wall; and
a second side wall, wherein the coil is arranged on the second side wall.

4. The wireless earphone charging case according to claim 2, wherein the charging case body comprises:
a first side wall, wherein the metal shaft is connected to the first side wall, and the coil is arranged on the first side wall.

5. The wireless earphone charging case according to claim 2, wherein the charging case body comprises:
a first side wall, wherein the metal shaft is connected to the first side wall;
a second side wall;
wherein the coil is arranged on each of the first side wall and the second side wall.

6. The wireless earphone charging case according to claim 2, wherein the charging case body defines a receiving space to receive a wireless earphone.

7. The wireless earphone charging case according to claim 1, further comprising:
a temperature detection module, configured to detect the temperature of the metal portion and being electrically connected to the control module.

8. The wireless earphone charging case according to claim 7, wherein the control module is configured to:
send a first control command via the coil to the charging base in response to the temperature detected by the temperature detection module being greater than or equal to a first predetermined temperature, causing the charging base to stop radiating electrical energy based on the first control command.

9. The wireless earphone charging case according to claim 8, wherein the control module is further configured to:
control, via the coil, the wireless communication between the wireless earphone charging case and the charging base to be disconnected, after the sending the first control command to the charging base to cause the charging base to stop radiating electrical energy based on the first control command.

10. The wireless earphone charging case according to claim 9, wherein the control module is configured to:
control, via the coil, the wireless communication between the wireless earphone charging case and the charging base to be disconnected within a predetermined period of time after sending the first control command to the charging base.

11. The wireless earphone charging case according to claim 9, wherein the control module is further configured to:
control the coil to respond to a handshake signal sent from the charging base in response to the temperature detected by the temperature detection module being less than a second predetermined temperature, for establishing the wireless communication between the wireless earphone charging case and the charging base and causing the charging base to charge the wireless earphone charging case;
wherein the second predetermined temperature is less than or equal to the first predetermined temperature.

12. The wireless earphone charging case according to claim 11, wherein the control module is configured to:
send a second control command via the coil to the charging base to allow the charging base to start radiating electrical energy based on the second control command to allow the charging base to charge the wireless earphone charging case, after the controlling the coil to respond to the handshake signal sent from the charging base to establish the wireless communication between the wireless earphone charging case and the charging base.

13. The wireless earphone charging case according to claim 12, further comprising:
a communication module, configured to provide a communication signal;
wherein the coil is electrically connected to the communication module, the coil is configured to interrupt transmission of the communication signal to disconnect the wireless communication between the wireless earphone charging case and the charging base, or configured to transmit the communication signal to establish the wireless communication between the wireless earphone charging case and the charging base.

14. The wireless earphone charging case according to claim 13, wherein the communication module comprises:
a signal modulation circuit, configured to provide the communication signal; and
a communication control circuit, electrically connected to the signal modulation circuit, the coil, and the control module,
wherein the control module is configured to control the communication control circuit to be conducted with or disconnected from the coil to enable the wireless earphone charging case to establish wireless communication with the charging base or to disconnect the wireless communication between the wireless earphone charging case and the charging base.

15. The wireless earphone charging case according to claim 14, wherein,
the communication control circuit comprises a first port, a second port, and a third port, the first port is electrically connected to the signal modulation circuit and the coil, the second port is grounded, and the third port is electrically connected to the control module; and
the control module is configured to control the first port to be conducted with or disconnected from the second port.

16. The wireless earphone charging case according to claim 15, wherein,
the communication control circuit comprises a transistor, the transistor is electrically connected to the first port, the second port, and the third port; and
the control module is configured to control the transistor to conduct the first port with the second port, or to disconnect the first port from the second port.

17. The wireless earphone charging case according to claim 14, wherein,
the communication control circuit comprises an analogue switch, the analogue switch is configured to allow the signal modulation circuit to be conducted with or disconnected from the coil; and
the control module is configured to control the analog switch to be conducted or disconnected.

18. A charging case, comprising:
a coil, configured to allow the charging case to communicate wirelessly with a charging base and configured to receive electrical energy from the charging base through electromagnetic induction when the charging case is communicating wirelessly with the charging base;
a metal portion, spaced apart from the coil and configured to, through electromagnetic induction, absorb electrical energy from the charging base and generate heat when the coil receives the electrical energy from the charging base through the electromagnetic induction; and
a control module, electrically connected to the coil and configured to send a control command to the charging base via the coil based on a temperature of the metal portion to allow the charging base to stop or to start radiating the electrical energy.

19. The charging case according to claim 18, further comprising:
a charging case body, wherein the coil is disposed inside the charging case body, and the control module is disposed inside the charging case body; and
a charging case lid, connected to the charging case body by a metal shaft, wherein the metal portion comprises the metal shaft.

20. The charging case according to claim 19, wherein the charging case body comprises:
a first side wall, wherein the metal shaft is connected to the first side wall; and
a second side wall, wherein the coil is arranged on the second side wall.

21. The charging case according to claim 19, wherein the charging case body comprises:
a first side wall, wherein the metal shaft is connected to the first side wall, and the coil is arranged on the first side wall.

22. The charging case according to claim 19, wherein the charging case body comprises:
a first side wall, wherein the metal shaft is connected to the first side wall;
a second side wall;
wherein the coil is arranged on each of the first side wall and the second side wall.

23. A wireless charging system, comprising:
a charging base, configured to radiate electrical energy wirelessly; and
a wireless earphone charging case, comprising:
a coil, configured to allow the wireless earphone charging case to communicate wirelessly with a charging base and configured to receive electrical energy from the charging base through electromagnetic induction when the wireless earphone charging case is communicating wirelessly with the charging base;
a metal portion, spaced apart from the coil and configured to, through electromagnetic induction, absorb electrical energy from the charging base and generate heat when the coil receives the electrical energy from the charging base through the electromagnetic induction; and
a control module, electrically connected to the coil and configured to send a control command to the charging base via the coil based on a temperature of the metal portion to allow the charging base to stop or to start radiating the electrical energy.
